# EUROPÄISCHE PATENTSCHRIFT

(11) **EP 1 795 490 B1**
(45) Veröffentlichungstag und Bekanntmachung des Hinweises auf die Patenterteilung: **06.07.2011**
(21) Anmeldenummer: 06023738.5
(22) Anmeldetag: 15.11.2006
(51) Int. Cl.: B66C 13/56

(54) **Kran mit Steuerung anhand von Logikbausteinen**
Crane controlled by means of logic modules
Grue contrôlée au moyen de modules logiques

(30) Priorität: 08.12.2005 DE 202005019225 U; 30.12.2005 DE 202005020462 U
(43) Veröffentlichungstag der Anmeldung: 13.06.2007
(73) Patentinhaber: Liebherr-Werk Ehingen GmbH, 89584 Ehingen/Donau (DE)
(72) Erfinder: Morath, Erwin, 89584 Lauterach (DE)
(74) Vertreter: Thoma, Michael

(56) Entgegenhaltungen:
- DE-A1- 19 505 845
- DE-A1- 19 619 419
- DE-U1- 9 010 967
- GB-A- 2 360 500

## Beschreibung

Die vorliegende Erfindung betrifft einen Kran, vorzugsweise Fahrzeugkran, mit mehreren Kranelementen, die durch Stellantriebe bewegbar sind, einer Kransteuerungseinheit zur Steuerung und/oder Überwachung der Bewegung der Kranelemente, sowie zumindest einem Betätigungsschalter zur Betätigung der Stellantriebe.

Bei modernen Fahrzeugkränen sind üblicherweise mehrachsig kippbare Steuerknüppel, die bisweilen auch Joysticks genannt werden, vorgesehen, um die diversen Kranelemente bzw. die hierfür vorgesehenen Stellantriebe, wie beispielsweise das Drehwerk, das Hubwerk, den Teleskopierantrieb oder den Wippantrieb, zu steuern. Hierbei ist üblicherweise den Steuerknüppeln eine Sensorik zugeordnet, über die die zentrale Kransteuerung Bewegungen des jeweiligen Steuerknüppels erfasst, wobei die zentrale Kransteuerungseinheit sodann die Bewegungssignale in Steuersignale für die Stellantriebe umsetzt. Mit anderen Worten wird die Stellbewegung der Steuerknüppel über die zentrale Kransteuerung in Steuerbefehle für die Stellantriebe umgesetzt. Die Stellantriebe sind dabei häufig hydraulisch ausgebildet und werden über Hydraulikventile gesteuert, deren Bewegung über die von der Kransteuerung erzeugten Steuerbefehle gesteuert wird.

Derartige Kransteuerungen haben sich zwar in der Praxis vielfach bewährt, nichtsdestotrotz sind sie jedoch in einigen Aspekten und für einige Anwendungsfälle verbesserungsfähig. Insbesondere wäre es wünschenswert, die Kosten derartiger Kransteuerungen zu drücken, ohne auf die vielfachen Funktionalitäten verzichten zu müssen. Zudem wäre es wünschenswert, die Umsetzung der Schalterbewegungen in tatsächliche Kranbewegungen schneller zu machen.

Aus der DE 196 19 419 ist ein Bediengerät für ein landwirtschaftliches Arbeitsgerät wie beispielsweise einen Feldhäcksler bekannt, das einen Betätigungsschalter in Form eines Joysticks zur Betätigung der Stellantriebe des Arbeitsgeräts aufweist, wobei in dem Trägergehäuse des Joysticks ein Microcontroller und eine CAN-Schnittstelle vorgesehen sind, so dass Steuersignale in Abhängigkeit der Stellung des Joysticks an einen Microrechner übertragbar sind.

Der vorliegenden Erfindung liegt daher die Aufgabe zugrunde, einen verbesserten Kran der genannten Art zu schaffen, der die Nachteile des Standes der Technik vermeidet und letzteren in vorteilhafter Weise weiterbildet. Vorzugsweise soll eine im Preis verbilligte Kransteuerung geschaffen werden, die eine schnelle Umsetzung der Schalterbewegungen in Kranbewegungen ermöglicht und eine hohe Sicherheit bietet.

Diese Aufgabe wird erfindungsgemäß durch einen Kran gemäß Anspruch 1 gelöst. Bevorzugte Ausgestaltungen der Erfindung sind Gegenstand der abhängigen Ansprüche.

Es wird also vorgeschlagen, dem zumindest einen Betätigungsschalter selbst eine ausreichende Intelligenz zu geben, um eine autonome Steuerung der jeweiligen Stellantriebe durch den Betätigungsschalter alleine zu erreichen. Der Betätigungsschalter ist ausreichend intelligent ausgebildet, um autonom zu steuern und ein entsprechendes Steuerungsprogramm abzuarbeiten. Erfindungsgemäß ist in den Betätigungsschalter ein Logikbaustein integriert, durch den die Stellantriebe entsprechend einer jeweiligen Schalterbetätigung direkt von dem Betätigungsschalter ansteuerbar sind. Dies erlaubt eine Steuerung der Stellantriebe ohne Zwischenschaltung der zentralen Kransteuerung. Der Logikbaustein besitzt hierzu zumindest einen Steuerausgang, über den im Betätigungsschalter erzeugte Steuerbefehle direkt an die Stellantriebe gegeben werden können. Die Kransteuerungseinheit wirkt dabei lediglich noch als übergeordnete Steuerung, die zur Erfüllung übergeordneter Steuerungsaufgaben durch eine Datenübertragungsverbindung mit dem in dem Betätigungsschalter vorgesehenen Logikbaustein verbindbar ist. Durch die Anordnung des Logikbausteins im Betätigungsschalter und die direkte Ansteuerung der Stellantriebe ohne Umweg über die zentrale Kransteuerung kann sich ein günstigerer Preis des Steuerungssystems ergeben, insofern als verschiedene Komponenten nicht doppelt vorgesehen werden müssen. Zudem erhöht sich die Sicherheit, da keine Komponentenkette zwischen dem Betätigungsschalter und dem jeweiligen Stellantrieb vorhanden sein und funktionieren muss. Zudem erhöht sich die Umsetzgeschwindigkeit, mit der Betätigungsschalterbewegungen in Kranbewegungen umgesetzt werden, da das Steuerungssignal direkt vom Schalter kommt und nicht erst durch die zentrale Kransteuerung gehen muss.

Insbesondere ist als Betätigungsschalter dabei ein mehrachsig kippbarer Steuerknüppel vorgesehen, der einen Busanschluss aufweist, um eine Kommunikation des integrierten Logikbausteins mit der übergeordneten zentralen Kransteuerungseinheit zu gestatten. Es versteht sich, dass dabei mehrere solche Betätigungsschalter vorgesehen sein können, um verschiedene Stellantriebe für verschiedene Kranelemente steuern zu können. Beispielsweise können zwei solche mehrachsig kippbaren Steuerknüppel vorgesehen sein, von denen der eine beispielsweise ein Drehwerk sowie ein Hubwerk des Krans und der andere beispielsweise das Wippen, das Ein- und Austeleskopieren des Auslegers und ggf. ein weiteres Hubwerk steuert.

Vorteilhafterweise sind der zumindest eine Betätigungsschalter einschließlich seines Logikbausteins und des Bussystems zwischen Schalter und übergeordnetem Kransteuerungsrechner sowie die Ansteuerung zwischen Schalter und Stellantrieb redundant und vorzugsweise diversitär ausgebildet. Erfindungsgemäß ist dabei die in den zumindest einen Betätigungsschalter integrierte Logik diversitär ausgebildet. Hierzu weist der Logikbaustein zwei Prozessoren verschiedener Typen auf, in die verschieden ausgebildete Software eingespielt ist. Hinsichtlich des Bussystems, das in Weiterbildung der Erfindung zwei- oder mehrkanalig ausgebildet ist, ist vorteilhafterweise ebenfalls eine diversitäre Ausbildung vorgesehen, die beispielsweise durch einen LSB-Bus und einen CAN-Bus verwirklicht sein kann. Grundsätzlich wäre zwar auch eine homogene Ausbildung des in den Schalter integrierten Logikbausteins und/oder des Bussystems zwischen Schalter und übergeordneter Kransteuerung möglich. Die redundante und diversitäre Ausbildung bewirkt jedoch neben einer erhöhten Sicherheit eine bessere Fehlererkennbarkeit, da Ausfälle immer eindeutig zurückverfolgt werden können.

Über den Anschluss der übergeordneten Kransteuerungseinheit an den Betätigungsschalter über das zuvor genannte Bussystem können von der Kransteuerungseinheit diverse übergeordnete Steuerungsfunktionen, die über die von dem im Schalter integrierten Logikbaustein bereitgestellten Funktionen hinausgehen bzw. letztere aktivieren oder abändern oder ergänzen, bereitgestellt werden. Insbesondere ist eine beliebige Parametrisierung des jeweiligen Betätigungsschalters möglich. Zum einen kann die durch den Logikbaustein bewirkte Signalerzeugung dahingehend parametrisiert werden, dass ein Totweg des Betätigungsschalters vermieden wird und eine 100%ige Schalterbewegung immer in eine 100%ige Kranelementebewegung umgesetzt wird. Andererseits kann auch eine Parametrisierung des Stellwegverlaufes erreicht werden, die von einer 1:1-Umsetzung der Schalterbewegung in Kranelementebewegungen abweicht. Wird z. B. der Hebel schlagartig bewegt, kann über einen Integrator eine sanfte Bewegung des angesteuerten Kranelements erreicht werden. Alternativ oder zusätzlich kann die Kransteuerung auch eine Umbelegung der Steuerausgänge des Logikbausteins vorsehen, so dass beispielsweise nach individuellem Wunsch des Endabnehmers beispielsweise die X-Achse des Betätigungsschalters als Steuerachse für das Wippwerk und für einen anderen Endabnehmer als Steuerungsachse für das Hubwerk belegt werden kann.

In Weiterbildung der Erfindung kann der zumindest eine Betätigungsschalter einen Vibrator aufweisen, der eine Rückmeldung bezüglich des Ansprechens der Kranbewegung gibt, um dem Kranführer ein Gefühl zu vermitteln, wann und wie stark die Hebelbewegung in eine Kranbewegung umgesetzt wird. Insbesondere kann der Vibrator in dem Betätigungsschalter über das Bussystem von der übergeordneten Kransteuerungseinheit her ansteuerbar und parametrisierbar ausgebildet sein. Hierbei wird über die zentrale Kransteuerung beispielsweise bestimmt, wie stark die maximale Vibration ist oder wie schnell die Vibration auf den maximalen Wert ansteigt.

In Weiterbildung der Erfindung ist die Zuordnung der Achsen des Betätigungsschalters über das Bussystem von der zentralen Kransteuerung her parametrisierbar. Hierdurch ist die Funktionalität des Hebels veränderbar, so dass zusätzliche Steuerungsaufgaben durch denselben Betätigungsschalter übernommen werden können. Die Steuerausgänge des Schalters gehen hierbei nicht zwangsweise nur auf die Ventile der Stellantriebe, die von dem Betätigungsschalter normalerweise gesteuert werden sollen, sondern es können die über die entsprechenden Steuerausgänge des Schalters erzeugten Signale von der zentralen Kransteuerungseinheit abgezogen werden und für andere Steueraufgaben verwendet werden. Beispielsweise kann die zentrale Steuereinheit, beispielsweise nach Betätigung eines entsprechenden Umschalters, die Steuerausgänge des Betätigungsschalters, die eigentlich für das Austeleskopieren des Kranauslegers vorgesehen sind, zum Ausfahren von Schiebeholmen zur Abstützung des Unterwagens verwenden.

Vorteilhafterweise kann nach einer weiteren bevorzugten Ausführung der Erfindung eine Rampensteuerung der Proportionalausgänge des Schalters über das Bussystem von der übergeordneten Kransteuerungseinheit ansteuerbar und/oder parametrisierbar sein. Insbesondere kann in Weiterbildung der Erfindung die Ansteuerung der Endstufen, die letztlich für eine Betätigung der Ventile der hydraulischen Stellantriebe sorgen, auch von der Kransteuerungseinrichtung her erfolgen, die Steuerbefehle werden sozusagen über die Kransteuerung umgeleitet. Dies erlaubt zum einen z. B. eine Umbelegung der Endstufenausgänge.

Zum anderen können von der zentralen Kransteuerungseinheit her auch die Magnetströme, die Kennlinien oder die sogenannte Dither-Ansteuerung über das Bussystem beeinflussbar und parametrierbar sein. Dabei können diverse Kennlinien in dem Logikbaustein des Betätigungsschalters abgelegt sein. Über die Kransteuerungseinheit wird die jeweils gewünschte aktiviert. Auch kann durch die Kransteuerung über das Bussystem ein Integrator zwischengeschaltet werden, der beispielsweise ein Durchreißen des Betätigungsschalters in gewünschter Weise in Steuerbefehle zur Ansteuerung der Stellantriebe umsetzt.

In Weiterbildung der Erfindung besitzt der Logikbaustein in dem zumindest einen Betätigungsschalter eine vorgegebene Default-Einstellung, durch die z. B. bei Ausfall der zentralen Kransteuerung ein vom Hauptrechner unabhängiger Betrieb der Stellantriebe ermöglicht wird. Bei Ausfall des Bussystems und/oder der zentralen Kransteuerung kann der Betätigungsschalter autonom den Kran betätigen. Dabei kann durch die vorgegebene Default-Einstellung sichergestellt werden, dass nach Art eines Notfallbetriebs nur ganz langsame oder in eine bestimmte Richtung gehende Kranbewegungen möglich sind. Beispielsweise kann vorgesehen sein, dass, wenn ein Signal von dem Bussystem bzw. von der zentralen Kransteuerung her fehlt, nur noch die langsamste Bewegungsstufe ansteuerbar ist. Aus der in dem Logikbaustein gespeicherten Steuerlogik wird eine Parametrierung für den Notfallbetrieb ausgewählt.

In Weiterbildung der Erfindung sind Steuerbefehle sowohl von dem Betätigungsschalter als auch von der übergelagerten Kransteuerungseinheit zur Betätigung der Stellantriebe möglich. Dabei hat vorteilhafterweise der kleinste Steuerbefehl Priorität, wodurch Funktionen wie Arbeitsbereichbegrenzung, Leistungsbegrenzung und beliebige hydraulische Mengenverhältnisse und damit Geschwindigkeiten der einzelnen Bewegungen von der übergelagerten Steuerung aus beeinflussbar sind. Mit anderen Worten ausgedrückt heißt dies, dass eine Begrenzung der Schaltersignale durch die Kransteuerungseinheit vorgesehen sein kann. Hierdurch kann ein elektronisches Loadsensing über eine Parametrisierung des Betätigungsschalters erreicht werden. Die übergelagerte Kransteuerungseinheit begrenzt die vom Betätigungsschalter ausgegebenen Steuersignale zur Ansteuerung der Stellantriebe stets so, dass die zur Verfügung stehende Hydraulikleistung passend auf die verschiedenen Verbraucher aufgeteilt wird. Die Betätigung der Stellantriebe wird an die zur Verfügung stehende Hydraulikleistung angepasst.

In Weiterbildung der Erfindung können die Steuerbefehle des Betätigungsschalters bzw. des darin integrierten Logikbausteins teilweise oder komplett deaktiviert werden. Die überlagerte Steuerung kann dabei über das Bussystem direkt die Stellantriebe sozusagen unter Überbrückung des Betätigungsschalters bzw. der darin integrierten Logik ansprechen. Hierdurch lassen sich Funkfernsteuerungen und Automatiksteuerungen realisieren. Hierzu sieht die übergelagerte Steuerung über das Bussystem ein Abhängen der Logikbausteinendstufen von den Stellantrieben vor, wodurch der Betätigungsschalter sozusagen totgeschaltet ist. Signale von der Kransteuerung können direkt an die Stellantriebe geleitet werden.

In Weiterbildung der Erfindung ist der Logikbaustein, der in den zumindest einen Betätigungsschalter integriert ist, frei programmierbar. Insbesondere kann der Logikbaustein hierzu einen entsprechenden Mikroprozessor aufweisen, in den über das Bussystem ein beliebiges Anwendungsprogramm ladbar ist. Ein Host-Rechner schiebt ein Steuerungsprogramm in den Logikbaustein des Betätigungsschalters, so dass dieser in der gewünschten Weise einen Steuerungsalgorithmus abarbeiten kann. Hierdurch sind autonome Steuerungsfunktionen in dem Betätigungsschalter realisierbar.

Die Erfindung wird nachfolgend anhand eines bevorzugten Ausführungsbeispiels und zugehöriger Zeichnungen näher erläutert. In den Zeichnungen zeigen:
- Fig. 1:: einen schematischen Schaltplan der Steuerung eines Krans nach einer bevorzugten Ausführung der Erfindung,
- Fig. 2:: eine schematische Darstellung eines Fahrzeugkrans, in dem die in Figur 1 gezeigte Steuerung verwirklicht sein kann,
- Fig. 3:: einen schematischen Schaltplan der Steuerung des Krans aus der vorhergehenden Figur nach einer weiteren bevorzugten Ausführung der Erfindung, bei der eine Mehrzahl von Kransensoren über jeweils ein Bussystem mit den Logikbausteinen der Betätigungsschalter verbunden sind,
- Fig. 4:: einen schematischen Schaltplan der Steuerung des Krans aus Fig. 2 nach einer weiteren bevorzugten Ausführung der Erfindung, bei der die Logikbausteine der Betätigungsschalter mit den Ventilen der Stellantriebe durch eine zweikanalige Verbindung verbunden sind, an die eine Diagnoseeinrichtung angeschlossen ist, und
- Fig. 5:: ein Diagramm des zeitlichen Verlaufes des Ansteuerstromes für einen Stellantrieb, bei dem ein Konstantstrom vorgesehen und über den Konstantstrom ein Dither mit einer Frequenz mit variabler Amplitude moduliert und geregelt wird.

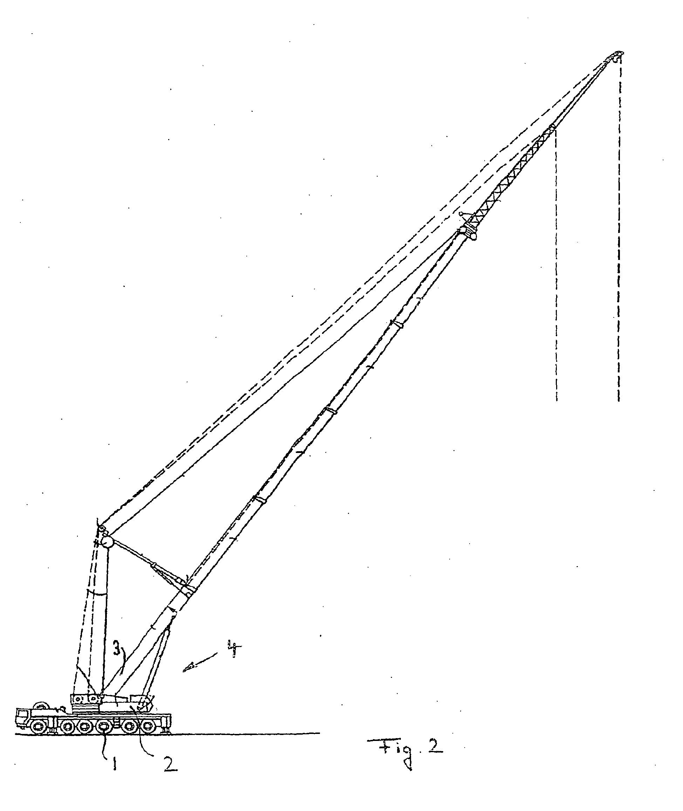

Der in Figur 2 gezeigte Kran umfasst in an sich bekannter Weise einen als LKW ausgebildeten Unterwagen 1, auf dem ein Oberwagen 2 um eine aufrechte Achse drehbar gelagert ist. An dem Oberwagen 2 ist ein teleskopierbarer Ausleger 3 um eine liegende Wippachse auf- und niederwippbar angelenkt, wobei an dem Ausleger 3 eine nicht dargestellte Klappspitze vorgesehen sein kann. Zur Bewegung der verschiedenen Kranelemente sind diverse nicht eigens gezeichnete Stellantriebe vorgesehen, die vorzugsweise hydraulisch ausgebildet sein können und ein Drehwerk, zumindest ein Hubwerk, einen Teleskopierantrieb, einen Wippantrieb sowie einen Klappspitzenantrieb umfassen können.

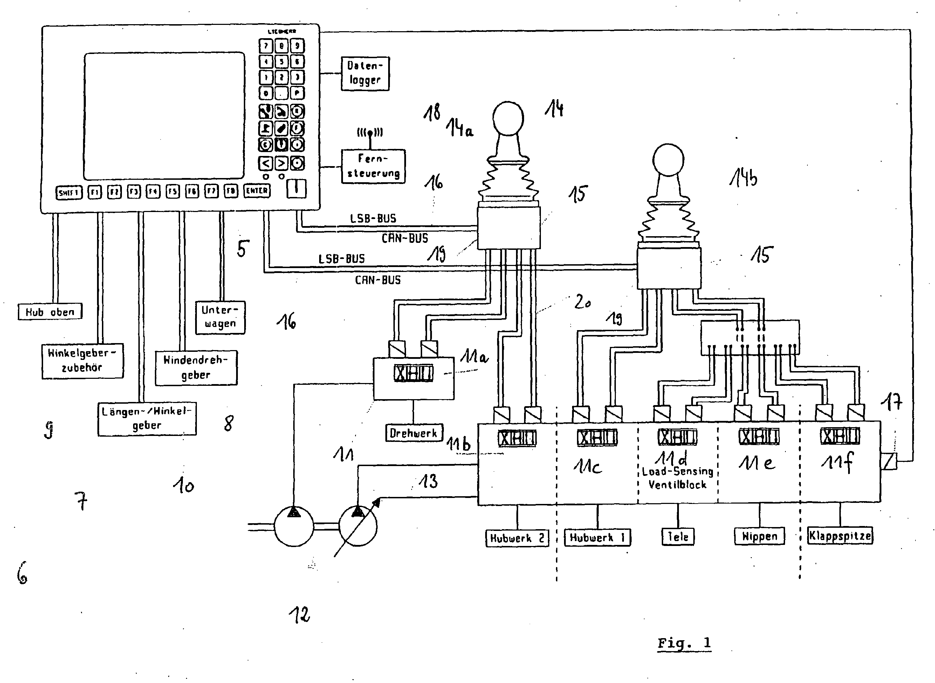

Wie Figur 1 zeigt, umfasst der Kran 4 eine zentrale Kransteuerungseinheit 5, die einen Hauptrechner aufweist, mittels dessen insbesondere eine Traglastüberwachung vorgenommen wird und eine übergeordnete Steuerung der Kranelemente erfolgen kann. Die Kransteuerungseinheit 5 ist dabei mit einer Sensorik 6 zur Überwachung der Bewegungen der Kranelemente sowie der Lasten versehen. Wie Figur 1 zeigt, kann die Sensorik 6 diverse Sensoren 7 umfassen, die die Stellung der Kranelemente und/oder der dafür vorgesehenen Stellantriebe sowie die auf die Kranelemente einwirkenden Lasten erfassen. Diese Sensoren 7 können beispielsweise einen der Hubwinde zugeordneten Windendrehgeber 8, einen dem Drehwerk für die Drehung des Oberwagens 2 zugeordneten Winkeldrehgeber 9 sowie einen Längen-/Winkelgeber 10 zur Erfassung der Stellung des teleskopierbaren Auslegers 3 aufweisen.

Die Stellantriebe sind in der gezeichneten Ausführung jeweils hydraulisch ausgebildet und werden von jeweils einem Hydraulikventil 11 in ihrer Bewegung gesteuert. Wie Figur 1 zeigt, ist ein Hydraulikventil 11a für das Drehwerk, ein Hydraulikventil 11b für ein zweites Hubwerk und ein Hydraulikventil 11c für ein erstes Hubwerk, sowie ein Hydraulikventil 11d für den Teleskopierantrieb, ein Hydraulikventil 11e für den Wippantrieb sowie ein Hydraulikventil 11f für die Betätigung der Klappspitze vorgesehen. Die Stellantriebe werden dabei über Hydraulikpumpen 12 gespeist, wobei vorteilhafterweise eine Hydraulikpumpe mit veränderbarem Schluckvolumen Verwendung finden kann, um die Hydraulikleistung anpassen zu können, was beispielsweise über eine hydraulische Rückkoppelung 13 der Abnehmer auf den Stellhebel der Pumpe erfolgen kann.

Die genannten Hydraulikventile 11 können von zwei Betätigungsschaltern 14 in Form von mehrachsig bewegbaren Steuerknüppeln angesteuert werden. Die genannten Steuerknüppel 14 umfassen dabei jeweils einen programmierbaren Logikbaustein 15 mit jeweils einer Ansteuerungsendstufe, der es erlaubt, die Hydraulikventile 11 autonom durch Bewegungen der Betätigungsschalter 14 anzusteuern. Die Steuerausgänge der Endstufen des jeweiligen Logikbausteins 15 sind dabei in der gezeichneten Weise mit jeweils einem der Hydraulikventile 11 verbunden, so dass eine vorbestimmte Schalterbewegung von dem Logikbaustein 15 in eine entsprechende Stellbewegung des jeweiligen Hydraulikventils 11 umgesetzt wird. In der gezeichneten Ausführung ist dabei der eine Betätigungsschalter 14a mit dem Hydraulikventil 11a für das Drehwerk und dem Hydraulikventil 11b für das zweite Hubwerk verknüpft, während der andere Betätigungsschalter 14b mit den Hydraulikventilen 11c bis 11f für das Hubwerk, den Teleskopierantrieb, den Wippantrieb und den Klappspitzenantrieb verknüpft ist. Es versteht sich jedoch, dass diese Aufteilung abweichend vorgenommen werden kann. Zudem kann in der zuvor beschriebenen Weise über eine Parametrisierung bzw. Umbelegung der Steuerausgänge durch die zentrale Kransteuerungseinheit 5 die Verknüpfung verändert werden.

Dabei ist die genannte zentrale Kransteuerungseinheit 5 jeweils über ein Bussystem 16 mit jedem der beiden Betätigungsschalter 14 verbunden, um die zuvor beschriebenen übergeordneten Steuerungsfunktionen ausführen und in die Steuerungsfunktion der Logikbausteine 15 eingreifen zu können. Vorteilhafterweise sind die Bussysteme 16 dabei jeweils zweikanalig ausgebildet, um eine Redundanz zu erreichen. Insbesondere ist dabei eine diversitäre Ausbildung vorgesehen, die in der gezeichneten Ausführung von einem LSB-Bus und einem CAN-Bus verwirklicht ist. Auch die Logikbausteine 15 besitzen vorteilhafterweise zwei Mikroprozessoren von verschiedenem Typ.

Durch den in die Betätigungsschalter 14 integrierten Logikbaustein 15 können die Stellantriebe von den Betätigungsschaltern 14 autonom, d.h. auch ohne Zwischenschaltung der zentralen Kransteuerungseinheit 15 betätigt werden. Andererseits erlaubt die Busverbindung zwischen den Betätigungsschaltern 14 und der zentralen Steuerungseinheit 5 eine überlagerte bzw. übergeordnete Steuerung der Stellantriebe von der zentralen Kransteuerungseinheit 5 her. Im Einzelnen wird auf die einleitende Beschreibung der übergeordneten Steuerungsfunktionen durch die zentrale Kransteuerungseinheit 5 verwiesen.

Vorteilhafterweise sind auch die Ansteuerstufen und/oder Verbindungen zwischen den Betätigungsschaltern 14 und den Hydraulikventilen 11 zweikanalig und/oder diversitär ausgebildet. Selbiges gilt für die Verbindungen zwischen den Sensoren 7 und der zentralen Kransteuerungseinheit 5. Beides kann durch ein zweikanaliges, verschieden ausgebildetes Bussystem verwirklicht sein.

Wie Figur 1 weiterhin zeigt, kann über die zentrale Kransteuerungseinheit 5 direkt, d.h. unter Überbrückung der Betätigungsschalter 14, ein Sicherheitsventil 17 betätigt werden, um beispielsweise bei Erreichen der Lastgrenzen den Stellantrieb abzustellen. Über ein Fernsteuerungsmodul 18, welches mit der zentralen Kransteuerungseinheit 5 verbunden ist, lässt sich eine Fernsteuerung der Stellantriebe über die Kransteuerungseinheit 5 und das Bussystem 16 verwirklichen.

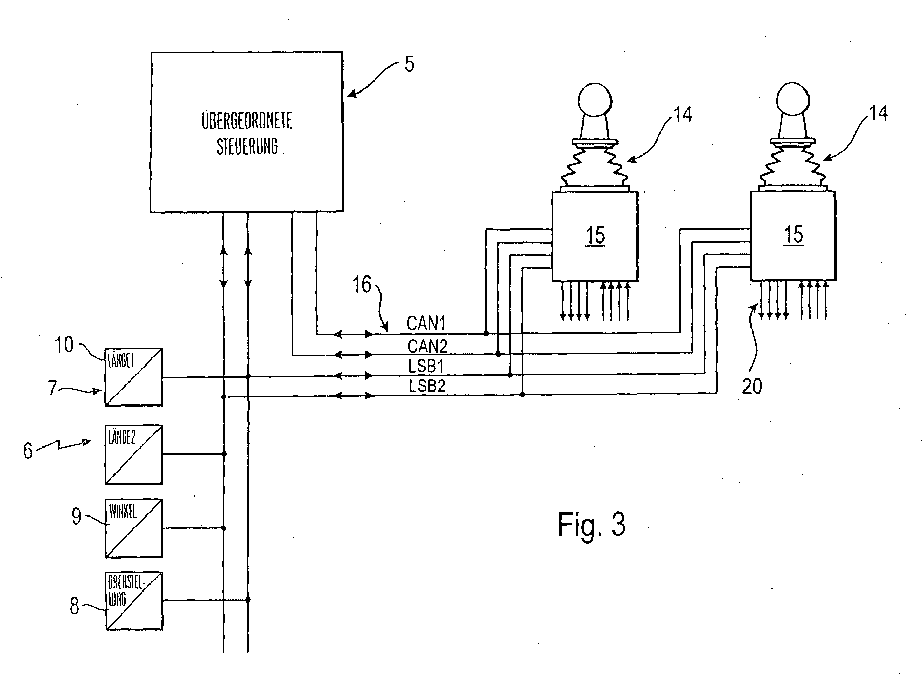

Wie Figur 3 zeigt, kann die Sensorik 6 mit ihren diversen Sensoren 7 nicht nur mit der übergeordneten Kransteuerungseinheit 5, sondern auch mit den Logikbausteinen 15 der Betätigungsschalter 14 verbunden sein. Bei der in Figur 3 gezeichneten Ausführung sind dabei die Sensoren 7 über Bussysteme mit beiden Logikbausteinen 15 der beiden Betätigungsschalter 14 verbunden. Zudem sind die Sensoren 7 über entsprechende Bussysteme auch direkt mit der übergeordneten Steuerung 5 verbunden. Durch die direkte Anbindung der Sensorik 6 auch an die Logikbausteine 15 können diese ggf. auch unter Umgehung der übergeordneten Steuerung 5 die Sensorsignale verarbeiten, die sie zur Ansteuerung der Stellantriebe 11 benötigen.

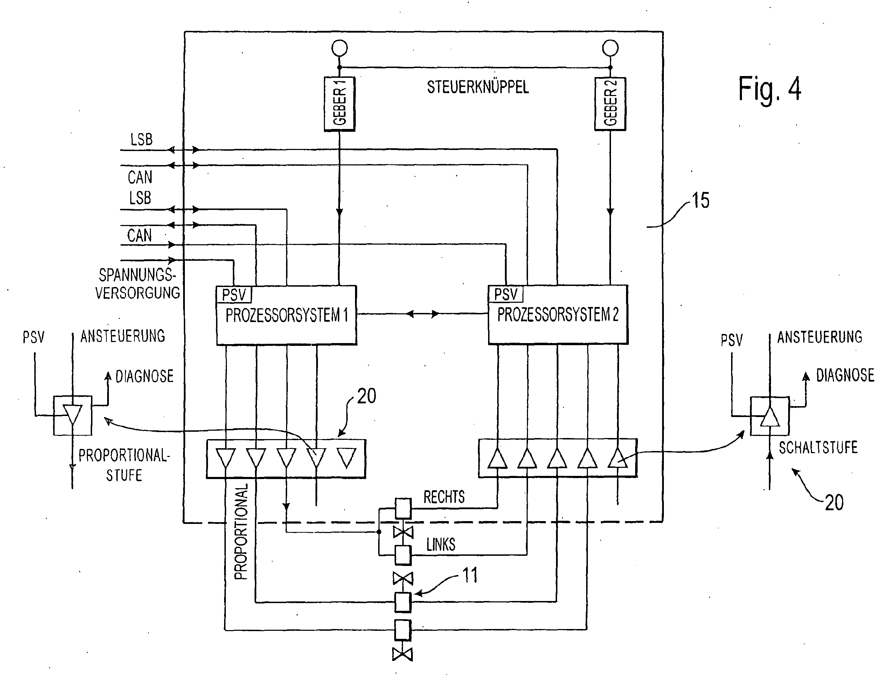

Figur 4 verdeutlicht eine besondere Ausbildung der Ansteuerung der Stellantriebe 11 durch die Logikbausteine 15, und zwar durch eine zweikanalige Verbindung der Logikbausteine 15 mit den entsprechenden Ventilen der Stellantriebe 11. Figur 4 zeigt dabei einen Logikbaustein 15, wobei zwei Prozessorsysteme über jeweils einen separaten Geber vom Steuerknüppel her bei Bewegungen desselben einen entsprechenden Input erhalten. Die Prozessorsysteme sind über Proportionalstufen mit den jeweiligen Ventilen der Stellantriebe 11 in der gezeichneten Weise verbunden. An die Proportionalstufen können Diagnoseverbindungen angeschlossen sein, wie dies die vergrößerte Darstellung der Proportionalstufen zeigt.

Vorteilhafterweise kann bei der zweikanaligen Ansteuerung der Stellantriebe über einen Kanal die Stromregelung erfolgen, während über den zweiten Kanal die Freischaltung erfolgt. Dabei ist die Ansteuerung vorzugsweise derart ausgebildet, dass sowohl die fließenden Ströme als auch die anliegenden Spannungen rücklesbar sind, wodurch eine hohe Fehleraufdeckung, wie beispielsweise Drahtbrüche, Kurzschlüsse, ein falscher Ventilanschluss etc., erreicht wird.

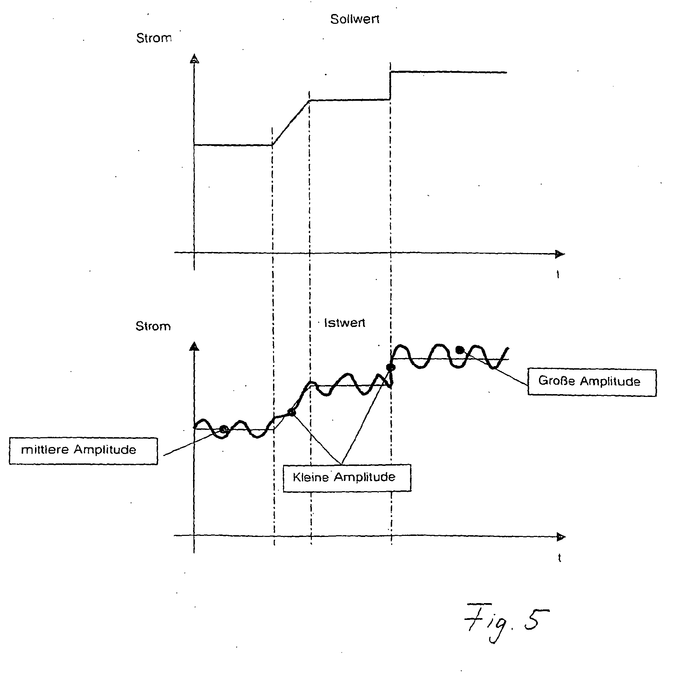

Wie Figur 5 verdeutlicht, erfolgt dabei die Ansteuerung der Ventile der Stellantriebe 11 derart, dass ein Konstantstrom mit Hilfe einer Pulsweitenmodulation mit konstanter Frequenz vorgesehen und darüber ein Dither mit einer Frequenz mit variabler Amplitude moduliert und geregelt wird. Vorzugsweise wird dabei ein Einschwingverhalten des Dithers vorgesehen, so dass bei Änderung des Konstantstroms die Ditheramplitude beeinflusst wird. Wie die untere Darstellung des IstWerts des Stromes gemäß Figur 5 zeigt, werden über den Ansteuerstrom verschiedene Ditheramplituden gelegt. In dem ersten Abschnitt konstanten Ansteuerstromes wird eine mittlere Ditheramplitude gelegt, während in den dann folgenden Abschnitten eine kleine Amplitude vorgesehen wird. Schließlich wird in dem letzten dargestellten Stromverlaufabschnitt eine große Amplitude vorgesehen.

Hierdurch ist eine optimale, feinfühlige dynamische Ansteuerung eines jeweiligen Hydraulikventils eines Stellantriebes 11 mit optimierter Hysterese möglich.

Um die vorgenannte Rücklesbarkeit der fließenden Ströme und der anliegenden Spannungen zu erreichen, kann die Steuerung Mittel zur Aufzeichnung der jeweils fließenden Ströme und der anliegenden Spannungen sowie Mittel zur Zuordnung der aufgezeichneten Werte zu einem oder mehreren Steuerbefehlen aufweisen, so dass es überprüfbar bzw. rücklesbar ist, in welche Ströme und welche Spannungen ein jeweiliger Steuerbefehl umgesetzt wurde. Hierdurch ist eine vollständige Fehlerdiagnose möglich. Vorteilhafterweise werden die den Steuerbefehlen zugeordneten aufgezeichneten Strom- und Spannungswerte von der Steuerung abrufbar bereitgestellt, so dass sie über eine Steuerungsschnittstelle ausgelesen oder ggf. auch von der Steuerung selbst angezeigt werden können.

## Patentansprüche

1. Kran, vorzugsweise Fahrzeugkran, mit mehreren Kranelementen, die durch Stellantriebe bewegbar sind, einer Kransteuerungseinheit (5) zur Steuerung und/oder Überwachung der Bewegung der Kranelemente, sowie zumindest einem Betätigungsschalter (14) zur Betätigung der Stellantriebe (11), **dadurch gekennzeichnet, dass** in den zumindest einen Betätigungsschalter (14) ein Logikbaustein (15) integriert ist, durch den die Stellantriebe (11) entsprechend einer jeweiligen Schalterbewegung direkt ansteuerbar sind, und die Kransteuerungseinheit (5) durch eine Datenübertragungsverbindung (16) mit dem Logikbaustein (15) verbindbar ist, wobei der Logikbaustein (15) unterschiedlich ausgebildete Prozessoren besitzt und damit diversitär ausgebildet ist.

2. Kran nach dem vorhergehenden Anspruch, wobei der Betätigungsschalter (14) als mehrachsig bewegbarer, insbesondere kippbarer Steuerknüppel, ausgebildet ist und/oder zumindest einen Busanschluss (19) zur Kommunikation mit der Kransteuerungseinheit (5) aufweist.

3. Kran nach einem der vorhergehenden Ansprüche, wobei zwischen der Kransteuerungseinheit (5) und dem Logikbaustein (15) ein zwei- oder mehrkanaliges Bussystem (16) vorgesehen ist, das unterschiedlich ausgebildete Kanäle besitzt und damit diversitär aufgebaut ist.

4. Kran nach einem der vorhergehenden Ansprüche, wobei zwischen dem Logikbaustein (15) und den Stellantrieben jeweils eine zwei- oder mehrkanalige und/oder diversitäre Ansteuerstufe und/oder Daten- und/oder Signalübertragungsverbindung (20) vorgesehen ist.

5. Kran nach einem der vorhergehenden Ansprüche, wobei der Logikbaustein (15) von der Kransteuerungseinheit (5) ansteuerbar und parametrisierbar ausgebildet ist.

6. Kran nach einem der vorhergehenden Ansprüche, wobei der Logikbaustein (15) zumindest einen Signalausgang aufweist, der von der Kransteuerungseinheit (5) begrenzbar ist.

7. Kran nach einem der vorhergehenden Ansprüche, wobei die Kransteuerungseinheit (5) einen Parametrisierungsbaustein zur Parametrisierung der von dem Logikbaustein (15) des Betätigungsschalters (14) bereitgestellten Signale aufweist.

8. Kran nach einem der vorhergehenden Ansprüche, wobei die Kransteuerungseinheit (5) einen Integratorbaustein zur Veränderung des von dem Logikbaustein (15) des Betätigungsschalters (14) bereitgestellten Signalverlaufs aufweist.

9. Kran nach einem der vorhergehenden Ansprüche, wobei die Kransteuerungseinheit einen Kurvenänderungsbaustein zur Veränderung des von dem Logikbaustein (15) des Betätigungsschalters (14) bereitgestellten Signalverlaufs aufweist.

10. Kran nach einem der vorhergehenden Ansprüche, wobei die Kransteuerungseinheit (5) einen Deaktivierungsbaustein zur Deaktivierung der von dem Logikbaustein (15) des Betätigungsschalters (14) bereitgestellten Signale aufweist.

11. Kran nach einem der vorhergehenden Ansprüche, wobei die Kransteuerungseinheit (5) einen Zuordnungsbaustein aufweist, durch den die von dem Logikbaustein (15) des Betätigungsschalters (14) bereitgestellten Signale von einem Stellantrieb des Krans abziehbar und auf einen anderen Stellantrieb gebbar sind.

12. Kran nach einem der vorhergehenden Ansprüche, wobei die Kransteuerungseinheit (5) einen Aktivierungsbaustein zur Aktivierung von Kennlinien und/oder Ansteuerungsfunktionen, die in dem Logikbaustein (15) gespeichert sind, aufweist.

13. Kran nach einem der vorhergehenden Ansprüche, wobei an dem Betätigungsschalter (14) ein Vibrator vorgesehen ist, der über den Busanschluss des Betätigungsschalters (14) parametrierbar ausgebildet ist.

14. Kran nach einem der vorhergehenden Ansprüche, wobei der Logikbaustein (15) zumindest einen Mikroprozessor aufweist, in den über den Busanschluss des Betätigungsschalters (14) ein Anwendungsprogramm einspielbar ist.

15. Kran nach einem der vorhergehenden Ansprüche, wobei in dem Logikbaustein (15) und/oder in der Kransteuerungseinheit (5) eine Vorrangsteuerung vorgesehen ist, durch die bei gleichzeitigem Vorliegen eines Steuerbefehls von dem Betätigungsschalter (14) und einem Steuersignal von der Kransteuerungseinheit (5) das kleinere der beiden Steuersignale Priorität hat.

16. Kran nach einem der vorhergehenden Ansprüche, wobei in der Kransteuerungseinheit (5) übergelagerte Steuerungsfunktionen zur Ergänzung, Abänderung und/oder Ersetzung der in dem Logikbaustein (15) des Betätigungsschalters (14) gespeicherten Steuerungsfunktionen vorgesehen sind.

17. Kran nach einem der vorhergehenden Ansprüche, wobei die Kransteuerungseinheit (5) mit einer Mehrzahl von Sensoren (6) zur Erfassung und/oder Überwachung von Kranbewegungen und/oder -Lastzuständen verbunden ist.

18. Kran nach einem der vorhergehenden Ansprüche, wobei die Stellantriebe hydraulisch ausgebildet sind und durch jeweils zumindest ein hydraulisches Ventil (11) steuerbar sind, das von dem Logikbaustein (15) des zumindest einen Betätigungsschalters (14) ansteuerbar ist.

19. Kran nach einem der vorhergehenden Ansprüche, wobei der Logikbaustein (15) des Betätigungsschalters (14) mit einer Mehrzahl von Sensoren (6) zur Erfassung und/oder Überwachung von Kranbewegungen und/oder -Lastzuständen verbunden ist.

20. Kran nach dem vorhergehenden Anspruch, wobei der Logikbaustein (15) mit der Mehrzahl von Sensoren (6) über zumindest ein Bussystem verbunden ist.

21. Kran nach einem der vorhergehenden Ansprüche, wobei der Logikbaustein (15) und/oder die Kransteuerungseinheit (5) Ansteuermittel zur mehrkanaligen Ansteuerung der Stellantriebe (11) aufweist, wobei die Ansteuermittel einen ersten Kanal zur Stromregelung und/oder -steuerung und einen zweiten Kanal zur Freischaltung umfassen.

22. Kran nach einem der vorhergehenden Ansprüche, wobei die Ansteuerung der Stellantriebe (11) derart ausgebildet ist, dass ein Konstantstrom mit Hilfe einer Pulsweitenmodulation mit konstanter Frequenz vorgesehen und über den Konstantstrom ein Dither mit einer Frequenz mit variabler Amplitude moduliert und geregelt wird.

23. Kran nach dem vorhergehenden Anspruch, wobei bei einer Änderung des Konstantstroms eine Änderung der Ditheramplitude vorgesehen ist, vorzugsweise die Ditheramplitude in Abhängigkeit einer Änderung des Konstantstroms veränderbar ist.

24. Kran nach einem der vorhergehenden Ansprüche, wobei eine rücklesbar ausgebildete Ansteuerung für die Stellantriebe (11) vorgesehen ist.

25. Kran nach dem vorhergehenden Anspruch, wobei Mittel zur Aufzeichnung der von der Ansteuerung der Stellantriebe (11) bereitgestellten Ströme und/oder Spannungen sowie Mittel zur Zuordnung der aufgezeichneten Ströme und/oder Spannungen zu einem jeweiligen Steuerbefehl vorgesehen sind.

## Claims

1. A crane, preferably a mobile crane, having a plurality of crane elements which are movable by actuating drives, having a crane control unit (5) for controlling and/or monitoring the movement of the crane elements, as well as having at least one actuating switch (14) for actuating the actuating drives (11), **characterised in that** a logic module (15), by which the actuating drives (11) can be controlled directly in accordance with a respective switch movement, is integrated into the at least one actuating switch (14) and the crane control unit (5) can be connected to the logic module (15) by a data transmission connection (16), with the logic module (15) having differently designed processors and thus being diversely designed.

2. A crane in accordance with the preceding claim, wherein the actuating switch (14) is designed as a multiaxially movable, in particular tiltable, control stick and/or has at least one bus connection (19) for communicating with the crane control unit (5).

3. A crane in accordance with one of the preceding claims, wherein a two-channel or multi-channel bus system (16), which has diversely designed channels and is thus diversely built, is provided between the crane control unit (5) and the logic module (15).

4. A crane in accordance with one of the preceding claims, wherein a respective two-channel or multi-channel and/or diverse control stage and/or data transmission and/or signal transmission device (20) is provided between the logic module (15) and the actuating drives.

5. A crane in accordance with one of the preceding claims, wherein the logic module (15) is controllable by the crane control unit (5) and is designed as parameterisable.

6. A crane in accordance with one of the preceding claims, wherein the logic module (15) has at least one signal output which can be limited by the crane control unit (5).

7. A crane in accordance with one of the preceding claims, wherein the crane control unit (5) has a parameterisation module for parameterising the signals provided by the logic module (15) of the actuating switch (14).

8. A crane in accordance with one of the preceding claims, wherein the crane control unit (5) has an integration module for changing the signal curve provided by the logic module (15) of the actuating switch (14).

9. A crane in accordance with one of the preceding claims, wherein the crane control unit has a curve changing module for changing the signal curve provided by the logic module (15) of the actuating switch (14).

10. A crane in accordance with one of the preceding claims, wherein the crane control unit (5) has a deactivating module for deactivating the signals provided by the logic module (15) of the actuating switch (14).

11. A crane in accordance with one of the preceding claims, wherein the crane control unit (5) has an association module by which the signals provided by the logic module (15) of the actuating switch (14) can be taken from an actuating drive of the crane and can be given to another actuating drive.

12. A crane in accordance with one of the preceding claims, wherein the crane control unit (5) has an activating module for activating characteristics and/or control functions which are stored in the logic module (15).

13. A crane in accordance with one of the preceding claims, wherein a vibrator which is designed as parameterisable via the bus connection of the actuating switch (14) is provided at the actuating switch (14).

14. A crane in accordance with one of the preceding claims, wherein the logic module (15) has at least one microprocessor into which an application program can be fed via the bus connection of the actuating switch (14).

15. A crane in accordance with one of the preceding claims, wherein a priority control by which, on the simultaneous presence of a control command from the actuating switch (14) and of a control signal from the crane control unit (5), the smaller of the two control signals has priority, is provided in the logic module (15) and/or in the crane control unit (5).

16. A crane in accordance with one of the preceding claims, wherein superimposed control functions are provided in the crane control unit (5) for supplementing, modifying and/or replacing the control functions stored in the logic module (15) of the actuating switch (14).

17. A crane in accordance with one of the preceding claims, wherein the crane control unit (5) is connected to a plurality of sensors (6) for detecting and/or monitoring crane movements and/or crane load states.

18. A crane in accordance with one of the preceding claims, wherein the actuating drives are designed as hydraulic and are controllable by in each case at least one hydraulic valve (11) which is controllable by the logic module (15) of the at least one actuating switch (14).

19. A crane in accordance with one of the preceding claims, wherein the logic module (15) of the actuating switch (14) is connected to a plurality of sensors (6) for detecting and/or monitoring crane movements and/or crane load states.

20. A crane in accordance with the preceding claim, wherein the logic module (15) is connected to the plurality of sensors (6) via at least one bus system.

21. A crane in accordance with one of the preceding claims, wherein the logic module (15) and/or the crane control unit (5) has control means for the multi-channel control of the actuating drives (11), wherein the control means include a first channel for the power regulation and/or control and a second channel for releasing.

22. A crane in accordance with one of the preceding claims, wherein the control of the actuating drives (11) is designed such that a constant current is provided with the aid of a pulse width modulation having a constant frequency and a dither having a frequency with a variable amplitude is modulated and regulated via the constant current.

23. A crane in accordance with the preceding claim, wherein, on a change of the constant current, a change of the dither amplitude is provided, the dither amplitude preferably being changeable in dependence on a change of the constant current.

24. A crane in accordance with one of the preceding claims, wherein a control designed to be able to be read back is provided for the actuating drives (11).

25. A crane in accordance with the preceding claim, wherein means are provided for recording the currents and/or voltages provided by the control of the actuating drives (11) as well as means for associating the recorded currents and/or voltages with a respective control command.

## Revendications

1. Grue, de préférence grue mobile, avec plusieurs éléments de grue qui sont déplaçables par des commandes de positionnement, une unité de commande de grue (5) pour la commande et/ou la surveillance du mouvement des éléments de grue, et avec au moins un commutateur d'actionnement (14) pour l'actionnement des commandes de positionnement (11), **caractérisée en ce qu'**est intégré dans le au moins un commutateur d'actionnement (14) un module logique (15) par lequel les commandes de positionnement (11), conformément à un mouvement de commutateur respectif, peuvent être commandées directement, et l'unité de commande de la grue (5) peut être reliée par une liaison de transmission de données (16) au module logique (15), où le module logique (15) possède des processeurs réalisés différemment et est donc réalisé pour diverses tâches.

2. Grue selon la revendication précédente, où le commutateur d'actionnement (14) est réalisé comme manche de commande déplaçable selon plusieurs axes, en particulier basculable et/ou présente au moins un raccord de bus (19) pour la communication avec l'unité de commande de grue (5).

3. Grue selon l'une des revendications précédentes, où est prévu entre l'unité de commande de grue (5) et le module logique (15) un système de bus à deux ou plusieurs canaux (16) qui possède des canaux réalisés différemment et qui est donc réalisé pour diverses tâches.

4. Grue selon l'une des revendications précédentes, où est prévu entre le module logique (15) et les commandes de positionnement à chaque fois un étage de commande pour diverses tâches à deux ou plusieurs canaux et/ou une liaison de transmission de données et/ou de signaux (20).

5. Grue selon l'une des revendications précédentes, où le module logique (15) est réalisé pour pouvoir être commandé et paramétré par l'unité de commande de grue (5).

6. Grue selon l'une des revendications précédentes, où le module logique (15) présente au moins une sortie de signaux qui peut être limitée par l'unité de commande de grue (5).

7. Grue selon l'une des revendications précédentes, où l'unité de commande de grue (5) présente un module de paramétrage pour le paramétrage des signaux mis à disposition par le module logique (15) du commutateur d'actionnement (14).

8. Grue selon l'une des revendications précédentes, où l'unité de commande de grue (5) présente un module d'intégration pour la modification du tracé de signaux mis à disposition par le module logique (15) du commutateur d'actionnement (14).

9. Grue selon l'une des revendications précédentes, où l'unité de commande de grue présente un module de modification de courbe pour la modification du tracé de signaux mis à disposition par le module logique (15) du commutateur d'actionnement (14).

10. Grue selon l'une des revendications précédentes, où l'unité de commande de grue (5) présente un module de désactivation pour la désactivation des signaux mis à disposition par le module logique (15) du commutateur d'actionnement (14).

11. Grue selon l'une des revendications précédentes, où l'unité de commande de grue (5) présente un module d'attribution par lequel les signaux mis à disposition par le module logique (15) du commutateur d'actionnement (14) peuvent être soustraits d'une commande de positionnement de la grue et peuvent être transférés à une autre commande de positionnement.

12. Grue selon l'une des revendications précédentes, où l'unité de commande de grue (5) présente un module d'activation pour l'activation de lignes caractéristiques et/ou de fonctions de commande, qui sont stockées dans le module logique (15).

13. Grue selon l'une des revendications précédentes, où est prévu au commutateur d'actionnement (14) un vibrateur qui est réalisé de façon à pouvoir être paramétré par le raccord de bus du commutateur d'actionnement (14).

14. Grue selon l'une des revendications précédentes, où le module logique (15) présente au moins un microprocesseur dans lequel un programme d'application peut être introduit par le raccord de bus du commutateur d'actionnement (14).

15. Grue selon l'une des revendications précédentes, où est prévue dans le module logique (15) et/ou dans l'unité de commande de grue (5) une commande prioritaire par laquelle, lors d'une présence simultanée d'une instruction de commande du commutateur d'actionnement (14) et d'un signal de commande de l'unité de commande de grue (5), le plus petit des deux signaux de commande a la priorité.

16. Grue selon l'une des revendications précédentes, où sont prévues dans l'unité de commande de grue (5) des fonctions de commande superposées pour compléter, modifier et/ou remplacer les fonctions de commande stockées dans le module logique (15) du commutateur d'actionnement (14).

17. Grue selon l'une des revendications précédentes, où l'unité de commande de grue (5) est reliée à une pluralité de capteurs (6) pour la détection et/ou la surveillance de mouvements de la grue et/ou d'états de charge de la grue.

18. Grue selon l'une des revendications précédentes, où les commandes de positionnement sont hydrauliques et peuvent être commandées par à chaque fois au moins une vanne hydraulique (11), qui peut être commandée par le module logique (15) du au moins un commutateur d'actionnement (14).

19. Grue selon l'une des revendications précédentes, où le module logique (15) du commutateur d'actionnement (14) est relié à une pluralité de capteurs (6) pour la détection et/ou la surveillance de mouvements de grue et/ou d'états de charge de la grue.

20. Grue selon la revendication précédente, où le module logique (15) est relié à la pluralité de capteurs (6) par au moins un système de bus.

21. Grue selon l'une des revendications précédentes, où le module logique (15) et/ou l'unité de commande de grue (5) présente des moyens de commande pour la commande à plusieurs canaux des entraînements de positionnement (11), où les moyens de commande comprennent un premier canal pour la régulation et/ou la commande du courant et un deuxième canal pour la commutation libre.

22. Grue selon l'une des revendications précédentes, où la commande des entraînements de positionnement (11) est réalisée de façon qu'un courant constant est prévu à l'aide d'une modulation de largeur d'impulsion d'une fréquence constante, et par le courant constant, un signal de superposition ayant une fréquence d'une amplitude variable est modulée et réglée.

23. Grue selon la revendication précédente, où lors d'une modification du courant constant, une modification de l'amplitude du signal de superposition est prévue, de préférence l'amplitude du signal de superposition peut être modifiée en fonction d'une modification du courant constant.

24. Grue selon l'une des revendications précédentes, où est prévue une commande de relecture pour les commandes de positionnement (11).

25. Grue selon la revendication précédente, où des moyens sont prévus pour l'enregistrement des courants et/ou tensions mis à disposition par la commande des commandes de positionnement (11) ainsi que des moyens pour l'attribution des courants et/ou tensions enregistrés à une instruction de commande respective.
